# EUROPEAN PATENT SPECIFICATION

(11) **EP 3 577 370 B1**
(45) Date of publication and mention of the grant of the patent: **21.04.2021**
(21) Application number: 18726318.1
(22) Date of filing: 02.02.2018
(51) Int. Cl.: F16H 61/00, F16H 61/662, F16H 55/56

(54) **HYDRAULICALLY ADJUSTABLE PULLEY FOR A CONTINUOUSLY VARIABLE TRANSMISSION**
HYDRAULISCH VERSTELLBARE RIEMENSCHEIBE FÜR EIN STUFENLOSES GETRIEBE
POULIE À RÉGLAGE HYDRAULIQUE POUR UNE TRANSMISSION À VARIATION CONTINUE

(30) Priority: 03.02.2017 NL 1042256
(43) Date of publication of application: 11.12.2019
(73) Proprietor: Robert Bosch GmbH, 70442 Stuttgart (DE)
(72) Inventor: MIERTSCH, Robert, 5000 AM Tilburg (NL); MUSCH, Peter, 5000 AM Tilburg (NL); WETERINGS, Kilian, Cornelis, Josephus, Maria, 5000 AM Tilburg (NL)
(74) Representative: Plevier, Gabriël Anton Johan Maria
(86) International application number: PCT/EP2018/025029
(87) International publication number: WO 2018/141487

(56) References cited:
- JP-A- 2010 014 200
- US-A- 2 916 024
- US-A- 4 753 627

## Description

The present disclosure relates to a hydraulically adjustable pulley device for a continuously variable transmission, as defined in the preamble of the claim 1 hereinafter. Such pulley and transmission are generally known in the art, for example from the Japanese patent publication JP 2010-002044 A1.

The known transmission includes two pulleys, i.e. both a primary or driving pulley coupled to a prime mover and a secondary or driven pulley coupled to a load, in particular to the driven wheels of a motor vehicle. Each such pulley comprises two (frusto-)conical discs arranged on a shaft and hydraulically operable adjustment means that serve to mutually urge the discs towards each other in axial direction. A drive belt, such as a metal push belt, a metal drive chain or a fibre-reinforced rubber pull belt, is wrapped around the pulleys, located (in part) between the discs thereof. During operation of the transmission and by the actuation of the pulley adjustment means, the drive belt is clamped between the two discs of both pulleys such that the rotation of one pulley is transmitted to the other one pulley. Also by means of the pulley adjustment means, in particular by the clamping force that is respectively exerted thereby on the belt at each pulley, a radius of curvature of the drive belt at each pulley, between the discs thereof, is controlled. In turn, these radii of curvature, in particular by the ratio there between, determine a speed ratio and a torque ratio of the transmission, which ratios can thus be controlled to an arbitrary value within a range of ratios determined by the transmission design through an appropriate actuation of the pulley adjustment means.

In the known transmission, the pulley adjustment means of either pulley comprise a piston/cylinder-assembly, whereof the piston is fixed to the pulley shaft and whereof the cylinder contains the piston in radial direction and is fixed to an axial side of a first pulley disc opposite the other, second pulley disc, which first pulley disc is mounted axially movable by being provided with a sleeve that is fitted around the pulley shaft. By applying a hydraulic pressure in a pulley cylinder chamber defined between the piston and the said first pulley discs, i.e. the pulley cylinder pressure, this first pulley disc is urged in axial direction towards the second pulley disc, such that the drive belt is clamped there between.

It is known that during operation of the transmission hydraulic fluid can leak from a hydraulic connection between a stationary external source of the pressurised hydraulic fluid and a hydraulic channel in the rotating pulley shaft that is connected to the pulley cylinder chamber of that pulley, reducing transmission efficiency. To reduce such leakage and thus to improve transmission efficiency, it is known to incorporate a hydraulic valve in the pulley shaft channel, i.e. in-between the pulley cylinder chamber and the said hydraulic connection. By closing such pulley valve, the said hydraulic connection can be depressurized to favourably reduce the leakage therefrom, while the pulley cylinder pressure is maintained. When it is (again) required to adjust the pulley clamping force, such pulley valve is actively opened, either to supply hydraulic fluid to, or to discharge hydraulic fluid from the pulley cylinder chamber.

The known pulley valve comprises a ball-shaped plug that is pressed into a circular seat by a spring of the pulley valve, in order to close an opening defined by and radially inside such plug seat. Furthermore, the pulley valve is provided with a plunger that engages the plug in the opposite direction relative to the force exerted on the plug by the plug spring. The plunger is shaped as a hollow tube with a circular cross-section that narrowly fits inside the plug seat. The plunger is arranged axially movable in the pulley shaft channel, activated by a hydraulic control pressure, such that it can lift, i.e. push the plug of its seat to open the pulley valve and channel. Furthermore, at the axial side thereof that engages the plug, the plunger is provided with holes, such that when the plunger has lifted the plug of its seat, hydraulic fluid can flow through the pulley valve via these holes and the radial inside of the plunger.

JP 2010-014200 A1 provides an alternative, known design of the pulley valve, in particular in terms of the plunger thereof. In this latter known design, the end of the plunger that engages the plug is shaped as a rod, whereas the opposite end of the plunger is shaped as a tube. These plunger ends are mutually connected by a number of ribs extending between them in radial direction. In this case, hydraulic fluid can flow through the pulley valve via these holes between the ribs.

It is generally preferred that the speed ratio of the transmission can be changed quickly, i.e. to restrict the flow of hydraulic fluid into and from of the pulley cylinder chambers as little as possible. In the known pulley design the fluid flow away from the pulley cylinder chamber, i.e. the discharge of hydraulic fluid from such chamber, is, however, limited by the cross-sectional area of the said holes of the plunger.

The present disclosure provides for a novel design of the pulley valve that -when it is open/opened- favourably allows for a relatively large fluid flow towards and away from the pulley cylinder chamber.

In the pulley valve according to the present disclosure, a piston plug, a plug seat and a plug spring are contained in a hollow cylindrical piston that is provided with a stepped outside diameter and that is arranged axially moveable in a housing, i.e. casing of the pulley valve. The plug spring is arranged to exert a force on piston plug for urging it into, or at least towards the plug seat. Although the plug spring can be fitted between the piston plug and the valve casing, it is preferably fitted between the piston plug and valve piston, such that such spring force is independent of a movement of the valve piston relative to the valve casing.

The valve casing is provided with an inwardly protruding abutment edge for interacting in a sealing manner with a smaller diameter side of the valve piston, while limiting the axial movement thereof relative to the valve casing. A further spring, i.e. a piston spring is fitted between the piston and the valve casing for urging the piston against, or at least towards the said abutment edge of valve casing. In-between the said abutment edge of the valve casing, the said smaller diameter side of the valve piston and a shoulder of that valve piston between the smaller and larger diameter sides thereof, a hydraulic pocket is present. The smaller diameter side of the piston is pierced through, providing a hydraulic connection of limited flow capacity, i.e. a hydraulic choke, between the hydraulic pocket and the inside of the piston that contains the piston plug. Finally, the pulley valve is provided with means, such as an axially movable plunger, that can be operated to push the piston plug of its seat inside the piston.

This novel pulley valve has the advantage that, after it is initially opened for discharging hydraulic fluid from the pulley cylinder chamber by pushing, i.e. lifting the piston plug of its seat inside the piston, the piston as whole will lift of the abutment edge of valve casing under influence of a pressure difference between the inside of the valve piston and in the hydraulic pocket. Hereby, a favourably large opening between the valve casing and the piston becomes available for the said discharge of hydraulic fluid, in particular in comparison with the opening provided by the holes of the plunger in the known pulley valve.

It is noted that the opening available for the said discharge of hydraulic fluid could also be increased by increasing the size, in particular the (inner) diameter of the plug seat. However, in that case the diameter of the piston plug has to be increased accordingly, resulting in a corresponding increase of the force required to push the piston plug of its seat by the plunger against the forces exerted thereon by both the plug spring and the pulley cylinder pressure that prevails (also) inside valve piston and thus severely complicating the design and/or the operation thereof.

The above-described basic features of the present disclosure will now be elucidated by way of example with reference to the accompanying figures.
Figure 1 is a symbolic representation of a known continuously variable transmission with two hydraulically adjustable pulleys, a drive belt and an electro-hydraulic control system.
Figure 2 illustrates the basic design of the known hydraulically adjustable pulley in cross-section.
Figure 3 is a schematic cross-section of the pulley valve according to the present disclosure in a closed state thereof.
Figure 4 is a schematic cross-section of the pulley valve according to the present disclosure in a supply state thereof.
Figure 5 is a schematic cross-section of the pulley valve according to the present disclosure in an initial discharge state thereof.
Figure 6 is a schematic cross-section of the pulley valve according to the present disclosure in a final discharge state thereof.

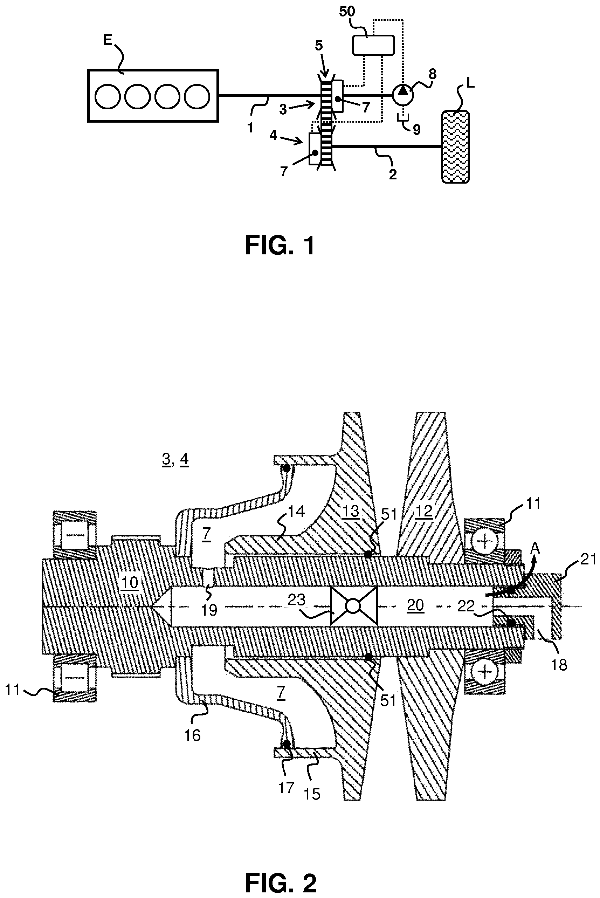

In figure 1 the known continuously variable transmission is depicted with an input or primary shaft 1 and with an output or secondary shaft 2. The known transmission is intended to be incorporated between an engine E and a load L for varying the transmission speed ratio there between within a continuous range of possible speed ratios.

The known transmission includes two hydraulically adjustable pulleys 3 and 4, i.e. both a primary, i.e. driving pulley 3 to be driven by the engine E via the transmission input shaft 2 and a secondary, i.e. driven pulley 4 to drive a driven wheel (L) of a motor vehicle. A drive belt 5, such as a metal push belt, is wrapped around and in frictional contact with the pulleys 3, 4. An electro-hydraulic control system is provided to hydraulically adjust the pulleys 3, 4 by way of controlling the hydraulic pressure in a cylinder chamber 7 of a piston/cylinder-assembly of each respective pulley 3, 4, in particular to control the transmission speed ratio and the friction between the drive belt 5 and the pulleys 3, 4. Hereto the control system of the known transmission includes at least a pump 8, for the supply of a flow of pressurised hydraulic fluid from a reservoir of hydraulic fluid 9, and a valve system 50.

The basic design of the hydraulically adjustable pulleys 3 and 4 is illustrated in more detail in Figure 2. In figure 2, the known pulley 3, 4 is shown to comprise a pulley shaft 10 rotatably born by bearings 11 and provided with two (frusto-)conical discs 12 and 13. A first pulley disc 12 is immovably fixed to, possibly integral with the pulley shaft 10. A second pulley disc 13 is fitted axially displaceable, i.e. moveable on the pulley shaft 10 by being provided with a sleeve 14 that is fitted on and around the pulley shaft with a radial clearance. The moveable pulley disc 13 and its sleeve 14 are typically locked relative to the pulley shaft 10 in rotational direction by means of a spline connection (not shown). The moveable pulley disc 13 can be moved or at least urged toward the other, fixed pulley disc 12 by exerting a hydraulic pressure in a cylinder chamber 7 of a piston/cylinder-assembly 15, 16 of the respective pulley 3, 4 and whereof a cylinder 15 is fixed to the moveable pulley disc 13 and a piston 16 is fixed to the pulley shaft 10. Between the piston 16 and the cylinder 15 a sealing ring 17 is that favourably prevents, or at least reduces, the leakage of hydraulic fluid from the cylinder chamber 7.

The cylinder chamber 7 is connected to a hydraulic line 18 of the electro-hydraulic control system 6 that is external to the pulley 3, 4, via a radially oriented bore 19 and an axially oriented channel 20 of the pulley shaft 10. A hydraulic connection 21 is provided between the pulley shaft channel 20 of the rotatable pulley shaft 10 and the said external line 18 that is external to the pulley 3, 4, i.e. that is stationary relative to the pulley shaft 10. In the shown example, the hydraulic connection 21 includes a cylindrically shaped section that is inserted in the pulley shaft channel 20 and a sealing ring 22 arranged on and around the outer circumference of the said cylindrically shaped section.

It is known that the hydraulic connection 21 between the pulley shaft channel 20 of the rotating pulley shaft 10 and the said external line 18 is prone to leakage of hydraulic fluid, as is generally indicated in figure 2 by the arrow A. In order to minimise such leakage and thus to improve the efficiency of the transmission as a whole, a valve 23 is provided in the pulley shaft channel 20. Such pulley valve 23 is designed and arranged to close when no hydraulic fluid is to be supplied to or discharged from the cylinder chamber 7. When the pulley valve 23 is closed, the said hydraulic connection 21 can be depressurised and the said detrimental leakage can be reduced, at least on average during operation of the transmission.

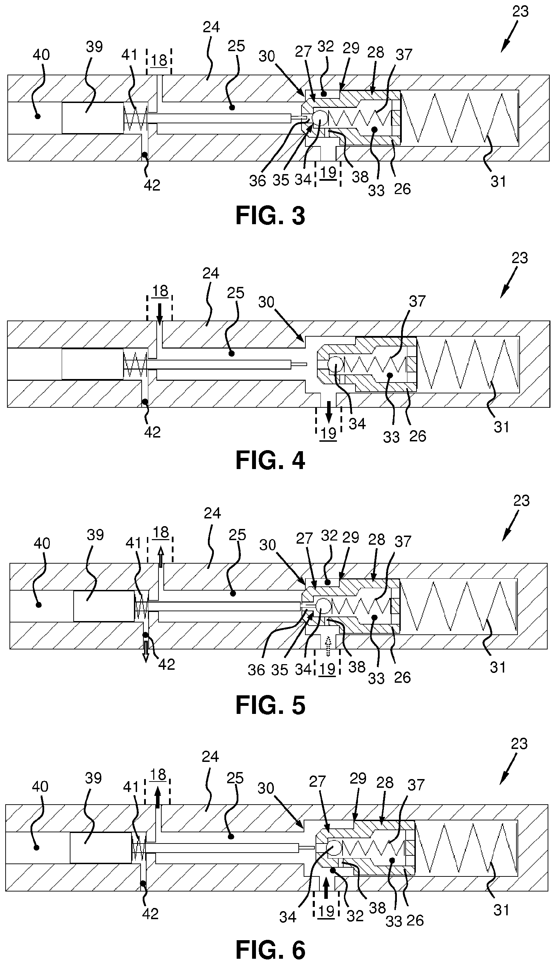

Figures 3 to 6 illustrate the design and working principle of a novel design of the pulley valve 23 in a schematic cross-sectional view thereof in accordance with the present disclosure. In figure 3, the novel pulley valve 23 is shown to comprise a valve casing 24 that defines an internal channel 25 for hydraulic fluid that is hydraulically connected to the said external line 18 and to the said radial bore 19. The valve casing 24 is preferably embodied by the pulley shaft 10 and the said internal channel 25 preferably embodies the pulley shaft channel 20 thereof. Inside the casing 24, a hollow cylindrical valve piston 26 is provided that is axially moveable relative to the valve casing 24. The valve piston 26 includes a first axial side 27 having a relatively small outer diameter and a second axial side 28 having a relatively large outer diameter, between which axial sides 27, 28 the piston 26 includes a shoulder 29.

The axial movement of the valve piston 26 is biased towards an inwardly protruding abutment edge 30 of the valve casing 24 by means of a piston spring 31 provided between the valve casing 24 and the valve piston 26. The valve piston 26 and the abutment edge 30 of the valve casing 24 are designed to provide a hydraulic seal between the said internal channel 25 and the said radial bore 19 when the piston 26 rests against the abutment edge 30. Also when the piston 26 rests against the abutment edge 30, a hydraulic pocket 32 is defined by and between the said abutment edge 30 of the valve casing 24, the smaller diameter side 27 of the valve piston 26 and the piston shoulder 29.

The valve piston 26 encloses a piston chamber 33, wherein a piston plug 34, a plug seat 35 circumscribing an opening 36 and a plug spring 37 are contained. The piston plug 34 is axially moveable relative to the valve piston 26, but is biased towards the plug seat 35 by the plug spring 37 that is thereto arranged between the valve piston 26 and the piston plug 34. The piston plug 34 and the plug seat 35 are designed to provide a hydraulic seal between the said internal channel 25 and the piston chamber 33 when the piston plug 34 rests on the plug seat 35. The piston chamber 33 is in direct hydraulic connection with the hydraulic pocket 32 via a channel 38 piercing through in the wall of the valve piston 26 and having a relatively small cross-sectional surface area in relation to its length, i.e. a choke 38. Thus, the valve piston 26 of the novel pulley valve 23 is moveable relative to the valve casing 24 and the abutment edge 30 thereof, for opening and closing a relatively large passage for hydraulic fluid between the cylinder chamber 7 and the external line 18, whereas the valve piston 26 itself includes a piston plug 34 that is moveable relative to the plug seat 35 thereof, for opening and closing a relatively small passage for hydraulic fluid.

The novel pulley valve 23 further comprises an axially movable plunger 39 that can be activated by applying a hydraulic control pressure in a control cylinder 40 of the pulley valve 23 to lift the piston plug 34 of its plug seat 35 and thus to open a direct hydraulic connection between the said internal channel 25 and the piston chamber 33 thereof. When the plunger 39 is activated, air (and/or hydraulic fluid that may have leaked from the control cylinder 40) in front of the plunger 39, i.e. on the side of the plunger return spring 41, is allowed to escape via an further channel 42 piercing through the wall of the valve casing 24. A plunger return spring 41 is provided to return the plunger 39 to its inactive position out of contact with the piston plug 34 when the plunger control pressure is removed, at least essentially. During such return of the plunger 39, air is draw in behind it via the said further channel 42 in the valve casing 24.

In figure 3 the novel pulley valve 23 is illustrated in its closed state. This closed state is entered into and/or prevails when both the hydraulic pressure in the internal channel 25 and the hydraulic pressure in the hydraulic pocket 32 are essentially equal to or lower than the hydraulic pressure in the piston chamber 33. In the closed state, the hydraulic pressures in the piston chamber 33 and in the hydraulic pocket 32 are equal to one another, since these communicate with one another via the choke 38. In these pressure conditions, the valve piston 26 and the piston plug 34 are pressed in firm, sealing contact with, respectively, the abutment edge 30 of the valve casing 24 and the plug seat 35 under influence of the said pressure difference and the force exerted by, respectively, the piston spring 31 and the plug spring 37. In particular, in the closed state of the novel pulley valve 23, the hydraulic pressure in the pulley cylinder chamber 7 is essentially maintained at its desired, constant level, while simultaneously the pressure level in the said external line 18 and in the said hydraulic connection 21 can be favourably reduced to zero, at least essentially.

In figure 4 the novel pulley valve 23 is illustrated in its supply state. Starting from the above-described closed state of the pulley valve 23, this supply state thereof occurs when the hydraulic pressure in the internal channel 25 is raised to above the hydraulic pressure in the piston chamber 33. In these pressure conditions, the valve piston 26 is lifted of the abutment edge 30 against the forces exerted by the hydraulic pressure in the piston chamber 33 and by the piston spring 31. Hereby, a gap is formed between the inwardly abutment edge 30 and the said first axial side 27 of the valve piston 26. Also in these pressure conditions and as illustrated in figure 4, the valve plug 34 remains seated in the piston seat 35 by the force exerted by the plug spring 37.

In particular, in the supply state of the novel pulley valve 23, hydraulic fluid is supplied from the said external line 18 and the internal channel 25 via the said gap between the inwardly abutment edge 30 and the said first axial side 27 of the valve piston 26 to the said radial bore 19 and into the pulley cylinder chamber 7 to increase the pulley cylinder pressure and/or to move the moveable pulley disc 13 toward the fixed pulley disc 12.

Once, in the supply state of the novel pulley valve 23, the pressure level in the pulley cylinder chamber 7 has increased to (essentially) the pressure level in the internal channel 25, the valve piston 26 returns to rest on the abutment edge 30 of the valve casing 24 by the force exerted by the piston spring 35 and the valve 23. Thereafter, the internal channel 25 can (again) be depressurised to return to the, efficiency enhancing, closed state of the novel pulley valve 23.

In figure 5 the novel pulley valve 23 is illustrated in its initial discharge state. Starting from the above-described closed state of the pulley valve 23, this initial discharge state thereof occurs the plunger 39 is activated by applying the plunger control pressure in the control cylinder 40 to lift the piston plug 34 of its plug seat 35. In this initial discharge state, hydraulic fluid flows from the piston chamber 33 via the opening 36 defined inside the plug seat 35 into the internal channel 25, whereby these respective hydraulic pressures are equalized, i.e. whereby the hydraulic pressure in the piston chamber 33 is decreased. Further in this initial discharge state, hydraulic fluid also flows from the hydraulic pocket 32 via the choke 38 into the piston chamber 33. However, due to the limited flow capacity of the choke 38, the pressure level in the hydraulic pocket 32 remains higher than the pressure level in the piston chamber 33. In these pressure conditions, the valve piston 26 is lifted of the abutment edge 30 of the valve casing 24 by the hydraulic pressure in the hydraulic pocket 32 acting on the piston shoulder 29 against the force exerted by the piston spring 31. Hereby, the gap between the inwardly abutment edge 30 and the said first axial side 27 of the valve piston 26 is formed. This latter state of the novel pulley valve 23 is denoted the final discharge state and is illustrated in figure 6.

In the final discharge state of the novel pulley valve 23, the gap between the inwardly abutment edge 30 and the valve piston 26 is available for the discharge of hydraulic fluid from the pulley cylinder chamber 7 into the said external line 18. This gap is large in comparison with the said opening 36 of the valve piston 26, such that a favourably large discharge flow is allowed thereby. Such discharge of hydraulic fluid form the pulley cylinder chamber 7 serves to decrease the pulley cylinder pressure and/or allows the moveable pulley disc 13 to move away from the fixed pulley disc 12. Once, in the final discharge state of the novel pulley valve 23, the pressure level in the pulley cylinder chamber 7 has reduced to (essentially) the pressure level in the internal channel 25, the valve piston 26 returns to rest on the abutment edge 30 of the valve casing 24 by the force exerted by the piston spring 35. Also in the final discharge state of the novel pulley valve 23, the plunger control pressure is removed to allow the plunger 39 to be deactivated by the plunger return spring 41. Thereafter, the internal channel 25 can (again) be depressurised to return to the, efficiency enhancing, closed state of the novel pulley valve 23.

In the embodiment example of the pulley valve 23 in figures 3 to 5, the plunger 39 is activated against the force of the return spring 41 to push the piston plug 34 of its plug seat 30 by exerting a pressure in the control cylinder 40 and is returned to its in active state by the return spring 41 when such plunger control pressure is removed, at least is insufficient to overcome the said force of the return spring 41. It is, however, also possible to arrange the (return) spring 41 and the control cylinder 40 oppositely relative to the plunger 39. In this latter pulley valve embodiment (not shown), the plunger would be activated to push the piston plug of its plug seat by the force of the spring and would be returned to its inactive state against the force of the spring by exerting and continuing to exert a (sufficient) plunger control pressure in the control cylinder. This latter embodiment of the pulley valve has the advantage that it remains open, i.e. that the pulley cylinder chamber 7 remains connected to the said external line 18 and controllable, also in case the plunger control pressure can inadvertently not be generated by the control system, e.g. due to a failure thereof.

Furthermore, according to the present disclosure, the effectiveness of the novel pulley valve 23 can be improved by providing the known pulley 3, 4 with a further sealing ring 51 between the sleeve 14 of the axially moveable pulley disc 13 and the pulley shaft 10 thereof, as illustrated in figure 2. By this further sealing ring 51, a clearance between such pulley sleeve 14 and pulley shaft 10 is bridged, preventing, or at least reducing the leakage of hydraulic fluid from the cylinder chamber 7 via such clearance. As a result, the pulley cylinder pressure can be maintained for longer and the hydraulic connection 21 needs to be pressurised and the pulley valve 23 needs to be opened favourably less frequently.

The present disclosure, in addition to the entirety of the preceding description and all details of the accompanying figures, also concerns and includes all the features of the appended set of claims. Bracketed references in the claims do not limit the scope thereof, but are merely provided as non-binding examples of the respective features. The claimed features can be applied separately in a given product or a given process, as the case may be, but it is also possible to apply any combination of two or more of such features therein.

The invention(s) represented by the present disclosure is (are) not limited to the embodiments and/or the examples that are explicitly mentioned herein, but also encompasses amendments, modifications and practical applications thereof, in particular those that lie within reach of the person skilled in the relevant art.

## Claims

1. A hydraulically adjustable pulley (3; 4) for a continuously variable transmission with two pulleys (3, 4) and a drive belt (5), which pulley (3; 4) is provided with two pulley discs (12, 13) on a pulley shaft (10), whereof at least one pulley disc (13) is moveable on the pulley shaft (10), whereto the pulley (3; 4) is provided with a piston/cylinder-assembly (15, 16) comprising a cylinder chamber (7), which cylinder chamber (7) is, or at least can be, connected to an external channel (18) of the transmission through an internal channel (20; 25) of the pulley shaft (10), which pulley (3; 4) is further provided with a pulley valve (23) arranged between the cylinder chamber (7) and the external channel (18) for selectively hydraulically connecting or hydraulically disconnecting these, which pulley valve (23) comprises a valve casing (24), a piston plug (34), a plug seat (35) circumscribing a flow opening (36) and a plunger (39), which plunger (39) is moveable relative to the plug seat (35) such that it can either extend through the flow opening (36) to push the piston plug (35) away from the plug seat (35) or can be retracted therefrom to allow the piston plug (35) to rest on the plug seat (35), **characterized in that** the pulley valve (23) further comprises a valve piston (26) that is moveable relative to the valve casing (24), that is provided with the plug seat (35) and the flow opening (36) and that defines a piston chamber (33) wherein the piston plug (34) is contained, and **in that** the valve casing (24) is provided with an abutment edge (30) that limits a movement of the valve piston (26) in the valve casing (24).

2. The hydraulically adjustable pulley (3; 4) according to claim 1, **characterized in that** the valve piston (26) is provided with a stepped outside diameter with a piston shoulder (29) between, on the one hand, a first axial side (27) of the valve piston (26) having a relatively small outer diameter and, on the other hand, a second axial side (28) of the valve piston (26) having a relatively large outer diameter, a hydraulic pocket (32) being defined between the valve casing (24), the abutment edge (30) thereof, the shoulder (29) of the valve piston (27) and the said the first axial side (27) thereof, which hydraulic pocket (32) is hydraulically connected to the piston chamber (33) through, at least, a bore (19) of the pulley shaft (10).

3. The hydraulically adjustable pulley (3; 4) according to claim 2, **characterized in that** the valve piston (26) is provided with a channel (38) that hydraulically connects the piston chamber (33) and the hydraulic pocket (32), which channel (38) is narrow relative to the said bore (19).

4. The hydraulically adjustable pulley (3; 4) according to a preceding claim, **characterized in that** the pulley valve (23) further comprises a piston spring (31) that urges the valve piston (26) against, or at least towards, the abutment edge (30) and that is preferably arranged between the valve piston (26) and the valve casing (24).

5. The hydraulically adjustable pulley (3; 4) according to a preceding claim, **characterized in that** the pulley valve (23) further comprises a the plug spring (37) that urges the piston plug (34) against, or at least towards, the plug seat (35) and that is preferably arranged between the piston plug (34) and the valve piston (26).

6. The hydraulically adjustable pulley (3; 4) according to a preceding claim, **characterized in that** the pulley shaft (10) constitutes the valve casing (24) of the pulley valve (23).

## Patentansprüche

1. Hydraulisch verstellbare Riemenscheibe (3; 4) für ein stufenloses Getriebe mit zwei Riemenscheiben (3, 4) und einem Antriebsriemen (5), wobei die Riemenscheibe (3; 4) mit zwei Riemenscheibentellern (12, 13) auf einer Riemenscheibenwelle (10) versehen ist, von denen mindestens ein Riemenscheibenteller (13) auf der Riemenscheibenwelle (10) beweglich ist, an der die Riemenscheibe (3; 4) mit einer Kolben/Zylinder-Anordnung (15, 16) vorgesehen ist, die eine Zylinderkammer (7) umfasst, wobei die Zylinderkammer (7) mit einem äußeren Kanal (18) des Getriebes durch einen inneren Kanal (20; 25) der Riemenscheibenwelle (10) verbunden ist oder zumindest verbunden sein kann, wobei die Riemenscheibe (3; 4) ferner mit einem Riemenscheibenventil (23) versehen ist, das dahingehend zwischen der Zylinderkammer (7) und dem äußeren Kanal (18) angeordnet ist, diese selektiv hydraulisch zu verbinden oder hydraulisch zu trennen, wobei das Riemenscheibenventil (23) ein Ventilgehäuse (24), einen Kolbenstopfen (34), einen Stopfensitz (35), der eine Strömungsöffnung (36) umgibt, und einen Stößel (39) umfasst, wobei der Stößel (39) bezüglich des Stopfensitzes (35) derart beweglich ist, dass er sich entweder durch die Strömungsöffnung (36) erstrecken kann, um den Kolbenstopfen (35) aus dem Stopfensitz (35) zu drücken, oder davon zurückgezogen werden kann, um zu gestatten, dass der Kolbenstopfen (35) auf dem Stopfensitz (35) aufliegt, **dadurch gekennzeichnet, dass** das Riemenscheibenventil (23) ferner einen Ventilkolben (26) umfasst, der bezüglich des Ventilgehäuses (24) beweglich ist, der mit dem Stopfensitz (35) und der Strömungsöffnung (36) versehen ist und der eine Kolbenkammer (33), in der der Kolbenstopfen (34) aufgenommen ist, definiert, und dadurch, dass das Ventilgehäuse (24) mit einem Anlagerand (30) versehen ist, der eine Bewegung des Ventilkolbens (26) in dem Ventilgehäuse (24) beschränkt.

2. Hydraulisch verstellbare Riemenscheibe (3; 4) nach Anspruch 1, **dadurch gekennzeichnet, dass** der Ventilkolben (26) mit einem abgestuften Außendurchmesser mit einer Kolbenschulter (29) zwischen einerseits einer ersten axialen Seite (27) des Ventilkolbens (26) mit einem relativ kleinen Außendurchmesser und andererseits einer zweiten axialen Seite (28) des Ventilkolbens (26) mit einem relativ großen Außendurchmesser versehen ist, wobei eine Hydrauliktasche (32) zwischen dem Ventilgehäuse (24), dem Anlagerand (30) davon, der Schulter (29) des Ventilkolbens (27) und der ersten axialen Seite (27) davon definiert wird, wobei die Hydrauliktasche (32) durch mindestens eine Bohrung (19) der Riemenscheibenwelle (10) hydraulisch mit der Kolbenkammer (33) verbunden ist.

3. Hydraulisch einstellbare Riemenscheibe (3; 4) nach Anspruch 2, **dadurch gekennzeichnet, dass** der Ventilkolben (26) mit einem Kanal (38) versehen ist, der die Kolbenkammer (33) und die Hydrauliktasche (32) hydraulisch verbindet, wobei der Kanal (38) in Bezug auf die Bohrung (19) schmal ist.

4. Hydraulisch einstellbare Riemenscheibe (3; 4) nach einem vorhergehenden Anspruch, **dadurch gekennzeichnet, dass** das Riemenscheibenventil (23) ferner eine Kolbenfeder (31) umfasst, die den Ventilkolben (26) an oder zumindest gegen den Anlagerand (30) drückt und die vorzugsweise zwischen den Ventilkolben (26) und dem Ventilgehäuse (24) angeordnet ist.

5. Hydraulisch einstellbare Riemenscheibe (3; 4) nach einem vorhergehenden Anspruch, **dadurch gekennzeichnet, dass** das Riemenscheibenventil (23) ferner eine Stopfenfeder (37) umfasst, die den Ventilkolben (34) an oder zumindest gegen den Stopfensitz (35) drückt und die vorzugsweise zwischen dem Kolbenstopfen (34) und dem Ventilkolben (26) angeordnet ist.

6. Hydraulisch einstellbare Riemenscheibe (3; 4) nach einem vorhergehenden Anspruch, **dadurch gekennzeichnet, dass** die Riemenscheibenwelle (10) das Ventilgehäuse (24) des Riemenscheibenventils (23) bildet.

## Revendications

1. Poulie ajustable hydrauliquement (3 ; 4) pour une transmission à variation continue comprenant deux poulies (3, 4) et une courroie d'entraînement (5), laquelle poulie (3 ; 4) est pourvue de deux disques de poulie (12, 13) sur un arbre de poulie (10), dont au moins un disque de poulie (13) peut être déplacé sur l'arbre de poulie (10) au niveau duquel la poulie (3 ; 4) est pourvue d'un ensemble cylindre-piston (15, 16) comprenant une chambre de cylindre (7), laquelle chambre de cylindre (7) est, ou au moins peut être, connectée à un canal extérieur (18) de la transmission par le biais d'un canal intérieur (20 ; 25) de l'arbre de poulie (10), laquelle poulie (3 ; 4) est en outre pourvue d'une valve de poulie (23) agencée entre la chambre de cylindre (7) et le canal extérieur (18) pour les connecter hydrauliquement ou les déconnecter hydrauliquement, de manière sélective, laquelle valve de poulie (23) comprend un boîtier de valve (24), un bouchon de piston (34), un siège de bouchon (35) entourant une ouverture d'écoulement (36) et un plongeur (39), lequel plongeur (39) peut être déplacé par rapport au siège de bouchon (35) de manière à ce qu'il puisse soit s'étendre à travers l'ouverture d'écoulement (36) pour pousser le bouchon de piston (35) à l'écart du siège de bouchon (35), soit être retiré hors de celle-ci pour permettre au bouchon de piston (35) de reposer sur le siège de bouchon (35), **caractérisée en ce que** la valve de poulie (23) comprend en outre un piston de valve (26) qui peut être déplacé par rapport au boîtier de valve (24), qui est pourvu du siège de bouchon (35) et de l'ouverture d'écoulement (36) et qui définit une chambre de piston (33) dans laquelle est contenu le bouchon de piston (34), et **en ce que** le boîtier de valve (24) est pourvu d'un bord de butée (30) qui limite un mouvement du piston de valve (26) dans le boîtier de valve (24).

2. Poulie ajustable hydrauliquement (3 ; 4) selon la revendication 1, **caractérisée en ce que** le piston de valve (26) est pourvu d'un diamètre extérieur étagé avec un épaulement de piston (29) entre, d'une part, un premier côté axial (27) du piston de valve (26) ayant un diamètre extérieur relativement petit et, d'autre part, un deuxième côté axial (28) du piston de valve (26) ayant un diamètre extérieur relativement grand, une poche hydraulique (32) étant définie entre le boîtier de valve (24), le bord de butée (30) de celui-ci, l'épaulement (29) du piston de valve (27) et ledit premier côté axial (27) de celui-ci, laquelle poche hydraulique (32) est connectée hydrauliquement à la chambre de piston (33) par le biais d'au moins un alésage (19) de l'arbre de poulie (10).

3. Poulie ajustable hydrauliquement (3 ; 4) selon la revendication 2, **caractérisée en ce que** le piston de valve (26) est pourvu d'un canal (38) qui relie hydrauliquement la chambre de piston (33) et la poche hydraulique (32), lequel canal (38) est étroit par rapport audit alésage (19).

4. Poulie ajustable hydrauliquement (3 ; 4) selon une revendication précédente, **caractérisée en ce que** la valve de poulie (23) comprend en outre un ressort de piston (31) qui pousse le piston de valve (26) contre, ou au moins vers, le bord de butée (30) et qui est de préférence disposé entre le piston de valve (26) et le boîtier de valve (24).

5. Poulie ajustable hydrauliquement (3 ; 4) selon une revendication précédente, **caractérisée en ce que** la valve de poulie (23) comprend en outre un ressort de bouchon (37) qui pousse le bouchon de piston (34) contre, ou au moins vers, le siège de bouchon (35) et qui est de préférence disposé entre le bouchon de piston (34) et le piston de valve (26).

6. Poulie ajustable hydrauliquement (3 ; 4) selon une revendication précédente, **caractérisée en ce que** l'arbre de poulie (10) constitue le boîtier de valve (24) de la valve de poulie (23).
